# EUROPÄISCHE PATENTANMELDUNG

(11) **EP 0 671 751 A2**
(43) Veröffentlichungstag der Anmeldung: **13.09.1995**
(21) Anmeldenummer: 95101507.2
(22) Anmeldetag: 03.02.1995
(51) Int. Cl.: H01H 13/70

(54) **Ergonomische Tastatur**

(30) Priorität: 11.03.1994 DE 4408330
(71) Anmelder: Cherry Mikroschalter GmbH, D-91275 Auerbach/Opf. (DE)
(72) Erfinder: Murmann, Günter, 91257 Pegnitz (DE); Frank, Manfred, 90556 Cadolzburg (DE)
(74) Vertreter: Fleuchaus, Leo, Dipl.-Ing.

(57) **Zusammenfassung**

Die Erfindung betrifft eine ergonomische Tastatur (1), welche aus wenigstens zwei getrennten Gehäusehälften (16, 17) besteht. Diese Gehäusehälften (16, 17) sind mittels Gelenken (4, 10) verbunden und gegeneinander schwenkbar und kippbar. Das erste Gelenk ist in Form einer in der Nähe des Drehpunkts (19) liegenden spiralförmigen Zugfeder (10) ausgeführt. Eine Gelenkplatte besteht aus einer im wesentlichen kreissektorenförmigen flexiblen Rastscheibe (4), die mit einer der beiden nebeneinanderliegenden Gehäusehälften (16) fest verbunden ist, und von dieser aus sich über die zwischen den beiden Gehäusehälften (16, 17) liegende Teilungslinie (15) hinweg in den Bereich der anderen Gehäusehälfte (17) erstreckt, sowie einer an der anderen Gehäusehälfte (17) angebrachten Rastzunge (26), welche in radial laufende Rillen (20) greift. Mit diesen beiden Gelenken ist ein gleichzeitiges Schwenken und Kippen der Gehäusehälften (16, 17) und ein Fixieren in verschiedenen Konfigurationen (α, β) möglich.

## Beschreibung

Die vorliegende Erfindung betrifft eine ergonomische Tastatur, und insbesondere eine ergonomische Tastatur mit einrastbar schwenk- und kippbaren Gehäusen nach dem Oberbegriff des Anspruchs 1.

Bei ergonomischen Tastaturen soll durch Abweichung von der bei Schreibmaschinen üblicherweise verwendeten klassischen Anordnung von parallel zueinanderlaufenden, starrliegenden, vom Benutzer weg nach hinten leicht ansteigenden Reihen von Tasten dem bei dieser klassischen Tastenanordnung erzwungenen unnatürlichen Eindrehen und Abwinkeln der Hände beim Bedienen der Tastatur sowie den durch die unterschiedliche Länge der einzelnen Finger bedingten unterschiedlichen Hubhöhen für die Fingeranschläge begegnet werden. Hierdurch soll einer verkrampften Körperhaltung entgegengewirkt werden, womit ein längeres ermüdungsfreies Arbeiten ermöglicht wird. Ferner soll das Auftreten von Langzeitfolgeschäden wie Sehnenscheidenentzündungen etc. vermieden werden.

Hierzu sind eine Reihe von Vorschlägen für ergonomisch günstigere Tastaturanordnungen gemacht worden. Eine erste Gruppe ergonomischer Tastaturen (DE-PS 5 777 708, DE-GM 87 16 224, DE-GM 88 01 303, US 5 119 078) sieht hierzu starrliegende Anordnungen von Tastaturblöcken vor, bei denen die Tastatur in (der im wesentlichen waagrecht verlaufenden) Blickrichtung des Benutzers in zwei Tastenfelder geteilt ist, wobei die Tastenreihen in jedem Teilfeld parallel zueinander verlaufen, und die beiden Teilfelder um eine senkrecht zur Blickachse stehende Achse geschwenkt sind, so daß sie in Blickrichtung keilförmig aufeinander zulaufen.

Eine zweite Gruppe ergonomischer Tastaturen sieht statt oder zusätzlich zu der oben beschriebenen, in Blickrichtung des Benutzers keilförmig zusammenlaufenden Anordnung der Tastenfelder vor, daß die Tastatur in der Mitte eine Wölbung aufweist. In der DE-GM 92 07 043 sind verschiedene Ausführungsformen für starr angeordnete Tastenfelder offenbart, die sich in ihrer Mitte (im Bereich, wo bei Gebrauch des Zehnfingersystems die Zeigefinger die Tasten anschlagen) von der Auflagefläche erheben, und zu beiden Seiten nach außen hin abfallen (wo die kleinen Finger anschlagen). In der DE-GM 92 00 531 ist neben dem oben beschriebenen keilförmigen Zusammenlaufen in Blickrichtung eine Wölbung in der Mitte der Tastatur vorgesehen, die im Gegensatz zu der in Verbindung mit der DE-GM 92 07 043 beschriebenen Wölbung zu den außen liegenden kleinen Fingern hin ansteigt, und in der Mitte im Bereich der Zeigfinger ihren tiefsten Punkt hat.

Bei diesen beiden Gruppen von Tastaturen wird durch das keilförmigen Zusammenlaufen in Blickrichtung sowie dem gewölbten Verlauf der Tasterfelder dem Abwinkeln und Verdrehen der Hände bis zu einem gewissen Grade entgegengewirkt, so daß sich damit ergonomisch eine Erleichterung für den Benutzer ergibt. Da es sich dabei aber um starre Tastenanordnungen handelt, ergibt sich keine individuell auf die Größe und persönlichen Bedürfnisse des Benutzers einstellbare Tastatur.

In Fortentwicklungen der ersten Gruppe bekannter ergonomischen Tastaturen sind verschiedene Vorschläge für Gelenkmechanismen gemacht worden, die ein Schwenken der beiden Gehäusehälften zueinander um eine senkrecht zur Blickachse stehende Achse über einen gewissen Winkelbereich hinweg ermöglichen (EP-A-489 491, DE-OS 41 08 096), die aber von innen (Bereich der Zeigefinger) nach außen (Bereich der kleinen Finger) keine Anpassung in der Höhe der Tasten ermöglichen, und so ebenfalls kein Optimum an ergonomischen Anpassungsmöglichkeiten zeigen. Zudem zeigen die dort offenbarten Gelenkmechanismen keine Möglichkeiten, die Tastenfelder in ihren geschwenkten Positionen relativ zueinander über den gesamten Winkelbereich hinweg stabil zu fixieren.

Die WO 92/0085 offenbart eine Anordnung von nebeneinanderliegenden, jeweils einen Teil der Gesamttastatur enthaltenden Tastenfeldern bei der die die einzelnen Tastenfelder enthaltenden, aus im wesentlichen planen Teilen bestehenden Gehäuseteilen mittels zueinander schwenk- und / oder kippbarer Gelenke verbunden sind, so daß die Anpassungsmöglichkeiten aller oben genannten Gruppen von ergonomischen Tastaturen gegeben sind. Die bei der WO 92/0085 verwendeten Kugelscharniergelenke ermöglichen jedoch nur relativ wenige stabile Einstellpositionen, in denen die gegeneinander geschwenkten und / oder gekippten Gehäuseteile fixiert werden können. Zudem bieten diese Kugelscharniergelenke keine Möglichkeit, elektrische Verbindungskabel zwischen den einzelnen Gehäuseteilen geschützt über den sich längs der Teilungslinie zwischen zwei benachbarten Gehäuseteilen bildenden Spalt zu führen. Da die Abstützung der zueinander geschwenkten und oder gekippten Tastaturblöcke im wesentlichen nur durch die Raststufen der Kugelgelenkscharniere bewirkt wird, ergibt sich zudem das Problem, daß man sich entweder für relativ schwergängige Kugelscharniergelenke entscheiden muß, die eine relativ stabile Fixierung der zueinander geschwenkten und / oder gekippten Gehäuseteile ermöglichen, aber das Verstellen stark hemmen, oder daß man sich für relativ leichtgängige Kugelscharniergelenke entscheidet, die eine leichte Verstellbarkeit auf Kosten der Stabilität ermöglichen. Zudem zeigt die WO 92/0085, daß die gegeneinander geschwenkten bzw. gekippten Gehäuseteile jeweils nur mit einem einen Bruchteil ihrer Grundfläche umfassenden Standbereich auf einer Unterlage aufliegen und deshalb eine optimale Standsicherheit nicht immer gesichert ist.

Ziel der vorliegenden Erfindung ist es deshalb, eine ergonomische Tastatur vorzuschlagen, die unabhängig voneinander sowohl ein Schwenken von Tastaturblöcken um eine senkrecht zur Blickrichtung des Benutzers stehende Achse, als auch ein Kippen einzelner Tastenblöcke um die Blickachse mit einer Vielzahl von individuell einstellbaren, sicher fixierbaren Rastpositionen mit guter Gängigkeit zwischen den Rastpositionen ermöglicht und zudem einen Gelenkmechanismus vorsieht, der es ermöglicht, Kabelverbindungen geschützt von einer Gehäusehälfte zu einer dazu schwenk- und kippbaren benachbarten Gehäusehälfte über den dazwischenliegenden Spalt zu führen, und in jeder Kombination der Schwenk- oder Kippmöglichkeiten der einzelnen Tastenfelder eine optimale Standsicherheit auf der Ablagefläche gewährleistet.

Diese Aufgabe wird durch eine ergonomische Tastatur nach Anspruch 1 gelöst. Vorteilhafte Weiterbildungen der erfindungsgemäßen Tastatur ergeben sich aus den Ansprüchen 2 bis 8.

Eine erfindungsgemäße ergonomische Tastatur ist in mindestens zwei gegeneinander schwenk- und kippbare Gehäusehälften aufgeteilt. In der Nähe des Drehpunkts der Schwenkbewegung, der auf der im wesentlichen in Richtung der Blickachse zwischen zwei nebeneinanderliegenden Gehäusehälften laufenden Teilungslinie liegt, ist ein jeweils quer zur Teilungslinie laufendes erstes Gelenk in Form einer spiralfömig aufgewickelten Zugfeder angebracht. Die nebeneinanderliegenden, voneinander getrennten Gehäusehälften für separate Tastenfelder sind jeweils zusätzlich zu diesem ersten Gelenk mit einer Schwenkführung verbunden, welche aus einer im wesentlichen kreissektorenförmigen flexiblen Rastscheibe besteht, die mit der einen der beiden nebeneinanderliegenden, voneinander getrennten Gehäusehälften fest verbunden ist, und von dieser aus sich über die Teilungslinie zwischen den beiden nebeneinanderliegenden Gehäusehälften in den Bereich der anderen Gehäusehälfte erstreckt. Zusätzlich dazu ist an der anderen Gehäusehälfte ein Haltestift angebracht, welcher in einen in der Rastscheibe zu dem äußeren Umfang einer Kreissektorfläche im wesentlichen konzentrisch verlaufenden Führungsschlitz so greift, daß ein Auseinanderschwenken der beiden Gehäusehälften um den auf der Teilungslinie zwischen den nebeneinanderliegenden Gehäusehälften liegenden und sich als Schnittpunkt von Radien der kreissektorenförmigen Rastscheibe ergebenden Drehpunkt möglich ist, wobei der Führungsschlitz durch Querschnittsänderungen in Umfangsrichtung Rastpositionen zum Einrasten des im Führungsschlitz gleitenden Haltestifts vorsehen kann. Durch die spiralförmige Zugfeder und die flexible Rastscheibe ist sowohl ein Schwenken als auch Kippen der miteinander verbundenen Gehäusehälften sowie ein stabiles Fixieren in einer durch die Rastpositionen der Rastscheibe vorgegebenen Vielzahl von Zwischenstellungen möglich.

Bei einer Weiterentwicklung der erfindungsgemäßen Tastatur sind an der Unterseite zwei Gruppen schwenkbarer Gehäusefüße unterschiedlicher Größe vorgesehen, die zwischen zwei Endstellungen (vollständig im Tastaturboden eingeklappt bzw. vollständig aus diesem ausgeklappt) geschwenkt und mittels Rastvorrichtungen in diesen Endstellungen fixiert werden können. Durch eine geschickte Anordnung der unterschiedlichen schwenkbaren Gehäusefüße über den Boden der Gehäusehälften hinweg und aufgrund der Tatsache, daß sich die beiden vorgesehenen Gruppen von schwenkbaren Gehäusefüßen im ausgeklappten Zustand in ihrer Ausklapphöhe über dem Boden der Gehäusehälften unterscheiden, ist es möglich, die gegeneinander geschwenkten und / oder gekippten Gehäusehälften in allen ihren aufgrund der spiralförmigen Zugfeder und der flexiblen Rastscheibe einnehmbaren, fixierbaren Zwischenpositionen auf der Auflagefläche so abzustützen, daß für alle Zwischenpositionen eine mechanisch stabile Konfiguration vorliegt. Dies wird zusätzlich dadurch unterstützt, daß die schwenkbaren Gehäusefüße an ihren abgerundeten Rändern mit überstehenden, rutschhemmenden Wülsten versehen sind, die ein Wegrutschen der schwenkbaren Gehäusefüße auf der Auflagefläche in allen möglichen Einstellungskonfigurationen verhindern.

Zusätzlich sind an jedem einzelnen der von einander getrennten Gehäusehälften Handballenauflagen anbringbar, die ebenfalls mit den oben beschriebenen Gruppen von schwenkbaren Gehäusefüßen versehen sein können.

Elektrische Verbindungskabel, die zwischen benachbarten, jeweils Teilfelder der Gesamttastatur enthaltenden Gehäusehälften über die in der Mitte liegende Teilungslinie geführt werden, können bei der erfindungsgemäßen Tastatur dadurch geschützt werden, daß sie im Inneren des als spiralförmige Zugfeder ausgebildeten ersten Gelenks geführt werden, so daß sie bei allen Schwenk- und Kippbewegungen der Gehäusehälften immer durch diese Zugfeder geschützt den Spalt zwischen den Gehäusehälften überbrücken.

Die Leertaste ist bei der erfindungsgemäßen Tastatur die einzige Taste, die gleichzeitig zwei Tastenfeldern zugeordnet und somit durch die Teilungslinie zwischen zwei benachbarten Gehäusehälften in zwei Leertastenhälften geteilt ist. Jede Leertastenhälfte besteht aus einem mit der jeweiligen Gehäusehälfte fest verbundenen Leertasten-Festteil, sowie einem darauf verschiebbaren Leertasten-Gleitteil, die mit in einander eingreifenden Rastvorrichtungen versehen sind. Diese Rastvorrichtungen ermöglichen ein Verschieben der Leertasten-Gleitteile auf den Leertasten-Festteilen zwischen einzelnen Rastpositionen. Im ausgeklappten Zustand der Gehäusehälften ist dadurch ein Überbrücken des dazwischenliegenden Spalts durch die ausgezogenen Leertasten-Gleitteile möglich.

Die Vorteile und Merkmale der Erfindung ergeben sich auch aus der nachfolgenden Beschreibung von Ausführungsbeispielen in Verbindung mit den Ansprüchen und den Zeichnungen.

Es zeigen:
- Fig. 1: eine Draufsicht auf eine erste Ausführungsform einer erfindungsgemäßen ergonomischen Tastatur im geschlossenen Zustand;
- Fig. 2: eine Draufsicht auf die in Fig. 1 gezeigte ergonomische Tastatur, wobei die beiden Gehäusehälften längs der Blickachse des Benutzers gegeneinander geschwenkt sind;
- Fig. 3: eine Ansicht von hinten auf eine zweite Ausführungsform einer erfindungsgemäßen ergonomischen Tastatur, wobei die in der Nähe der Teilungslinie zwischen den beiden Gehäusehälften liegenden schwenkbaren Gehäusefüße ausgeklappt und die beiden Gehäusehälften um die Blickachse gegeneinander gekippt sind;
- Fig. 4: eine Unteransicht auf die in Fig. 1 gezeigte ergonomische Tastatur;
- Fig. 5: eine Unteransicht auf die in Fig. 2 gezeigte ergonomische Tastatur;
- Fig. 6: die bei der erfindungsgemäßen ergonomischen Tastatur verwendete flexible Rastscheibe samt darin eingreifendem Haltestift ;
- Fig. 7: die bei der erfindungsgemäßen ergonomischen Tastatur verwendeten beiden Gruppen von schwenkbaren Gehäusefüßen;
- Fig. 8: die Verwendung einer ein Verbindungsgelenk zwischen benachbarten Gehäusehälften bildenden spiralförmigen Zugfeder als Führung für elektrische Verbindungskabel;
- Fig. 9a und 9b: ein Leertasten-Gleitteil; und
- Fig. 10: das zum in Fig. 9a und 9b gezeigten Leertasten-Gleitteil gehörende Leertasten-Festteil.

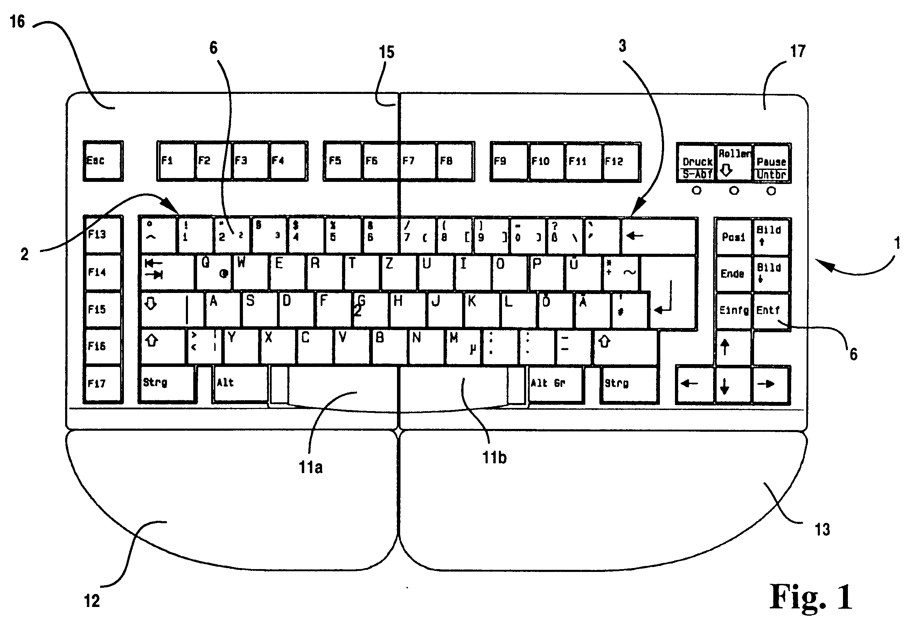

Fig. 1 zeigt eine Draufsicht auf eine erste Ausführungsform einer ergonomischen Tastatur 1, die zwei längs einer im wesentlichen in (waagrechter) Blickrichtung des Benutzers laufenden Teilungslinie 15 geteilte Tastenfelder 2 und 3 enthält, die jeweils in einem linken und einer rechten Gehäusehälfte 16 bzw. 17 untergebracht sind. Das rechte Tastenfeld umfaßt in diesem Fall eine höhere Anzahl von Einzeltasten 6 als das linke Tastenfeld und die beiden Gehäusehälften weisen unterschiedliche Größen auf. Mit Ausnahme der Leertaste, die in der Mitte in zwei Hälften 11a, 11b geteilt ist, sind alle Tasten entweder dem linken oder dem rechten Tastenfeld 2 bzw. 3 eindeutig zugeordnet. Vor der linken und rechten Gehäusehälfte 16 bzw. 17 ist je eine linke und rechte abnehmbare Handballenauflage 12 bzw. 13 angebracht. Fig. 1 zeigt die Tastatur 1 in ihrer Standardkonfiguration mit parallel zueinander liegenden Tastenfeldern, die den kompaktesten Aufbau der Tastatur ergibt, und z. B. beim Transport oder bei beengten Platzverhältnissen verwendet werden kann.

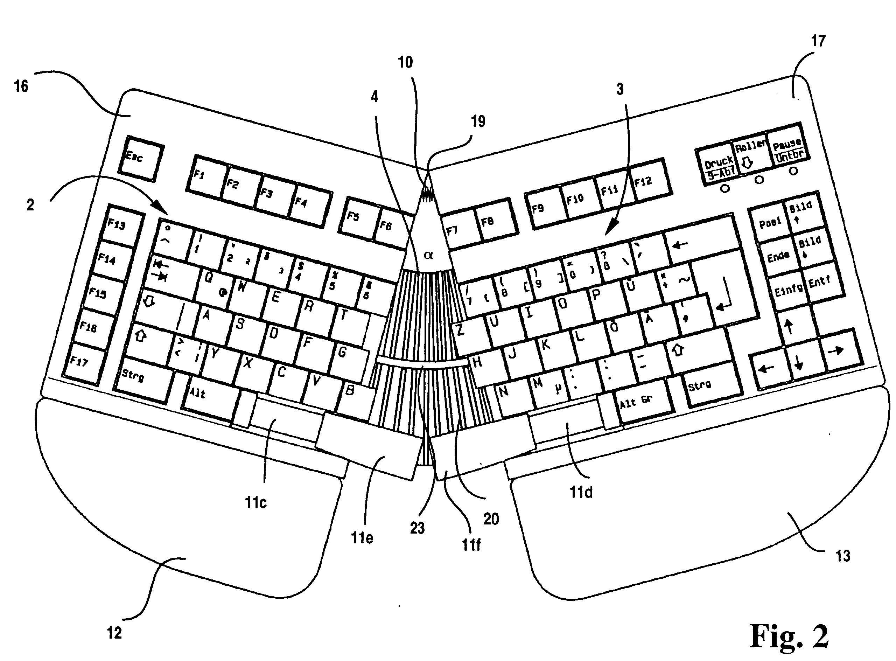

Fig. 2 zeigt die in Fig. 1 gezeigte ergonomische Tastatur 1 im aufgeklappten Zustand, wobei die linke und die rechte Gehäusehälfte 16 bzw. 17 samt den zugehörigen Handballenauflagen 12 bzw. 13 um einen auf der Teilungslinie 15 in der Nähe der Zugfeder 10 liegenden Drehpunkt 19 von einander weg geschwenkt sind. Dadurch ergibt sich in der Mitte zwischen diesen beiden Gehäusehälften 16 bzw. 17 ein im wesentlichen keilförmiger Spalt mit Öffnungswinkel α, der die Sicht auf die sich im Inneren befindliche Rastscheibe 4 freigibt.

Die beiden Hälften der in der Mitte geteilten Leertaste bestehen ihrerseits wiederum aus je zwei Teilen, nämlich je einem mit der zugehörigen Gehäusehälfte festverbundenen Leertasten-Festteil 11c bzw. 11d und einem darauf verschiebbaren Leertasten-Gleitteil 11e bzw. 11f. Beim Auseinanderschwenken der beiden Tasterfelder 2, 3 können die Leertasten-Gleitteile 11e bzw. 11f so verschoben werden, daß sie den in der Mitte liegenden Spalt überbrücken. Durch die keilförmig geöffnete Anordnung der beiden Gehäusehälften sind das linke und rechte Tastenfeld 2 bzw. 3 jeweils zu der entspannt liegenden linken bzw. rechten Hand hin orientiert, so daß ein ergonomisch günstigeres Arbeiten möglich ist.

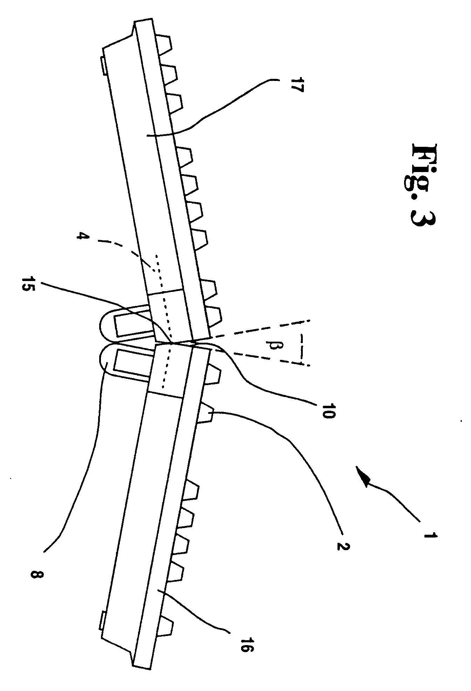

Fig. 3 zeigt eine Ansicht von hinten auf eine zweite Ausführungsform einer erfindungsgemäßen ergonomischen Tastatur 1 mit zwei gleich großen Gehäusehälften 16 bzw. 17, wobei die beiden Gehäusehälften längs der Teilungslinie 15 um einen Winkel β gegeneinander gekippt sind. Um die für die Kippung notwendige Überhöhung der beiden Gehäusehälften 16, 17 in der Nähe der Teilungslinie 15 zu erhalten, sind die schwenkbaren Gehäusefüße 8 an der Unterseite der Gehäusehälften ausgeklappt. Bei dieser Ausführungsform ist eine spiralförmige Zugfeder 10 im Inneren der Gehäusehälften angebracht und überbrückt die Teilungslinie 15. Diese Zugfeder 10 dient neben der im Inneren der Gehäusehälften liegenden, gestrichelt angedeuteten Rastscheibe 4 dazu, die beiden Gehäusehälften zusammen zu halten. Durch die zusätzlich zu der in Verbindung mit Fig. 2 erläuterte Schwenkmöglichkeit gegebene Kippmöglichkeit ergeben sich eine Vielzahl von durch den Benutzer individuell auf seine Bedürfnisse einstellbaren Konfigurationen der beiden Gehäusehälften.

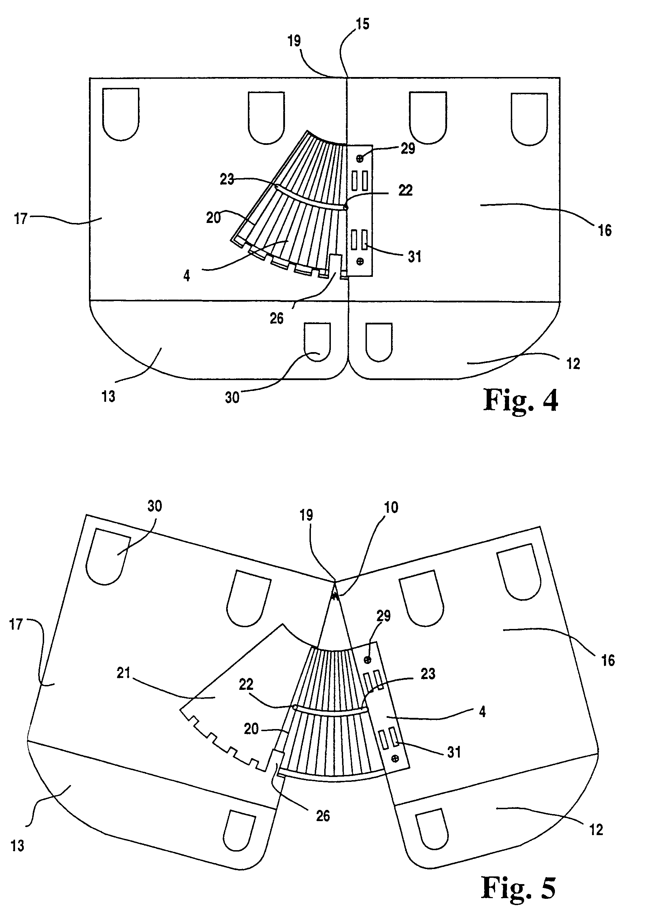

Fig. 4 und 5 zeigen Unteransichten auf die in Fig. 1 und 2 gezeigte erste Ausführungsform der erfindungsgemäßen ergonomischen Tastatur 1 im geschlossenen bzw. geöffneten Zustand, wobei die beiden Gehäusehälften 16, 17 längs der Blickachse des Benutzers (Teilungslinie 15) gegeneinander geschwenkt sind. Dabei sind an den Unterseiten der beiden Gehäusehälften angebrachte Abdeckplatten (nicht gezeigt) abgenommen, so daß der Blick auf die Rastscheibe 4 freigegeben wird. Ebenso sind die in den Aussparungen 30 angebrachten schwenkbaren Gehäusefüße in diesen Unteransichten nicht dargestellt.

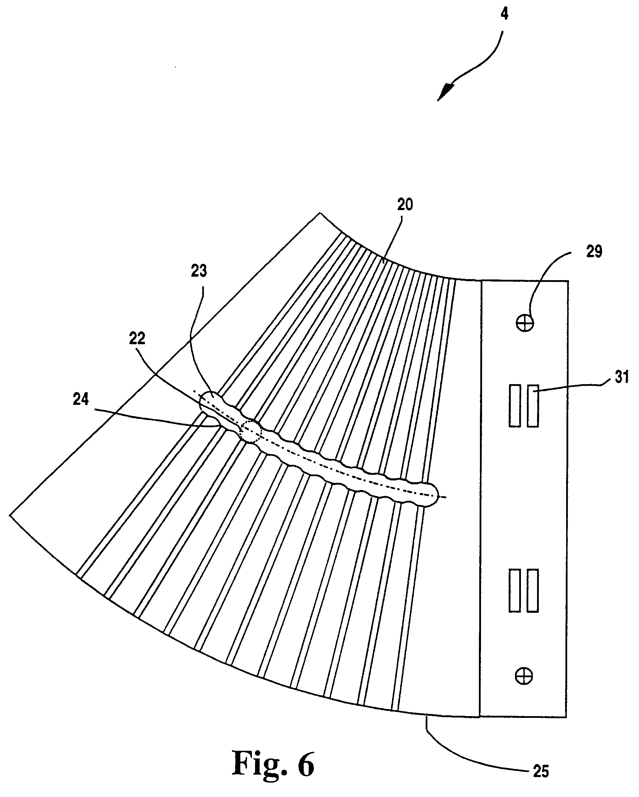

Die in Fig. 6 nochmals vergrößert dargestellte Rastscheibe 4 hat einen im wesentlichen kreissektorenförmigen Aufbau und besteht aus einem flexiblen aber ausreichend festen Material, wie z. B. einer dünnen Kunststoffscheibe, die mit radial verlaufenden Rillen 20 versehen ist, an denen die Rastscheibe 4 dünner ist, als in anderen Bereichen. Dadurch wird ein Knicken der Rastscheibe 4 längs dieser Rillen 20 erleichtert. Die Rastscheibe 4 ist so orientiert, daß sich die Verlängerungen der radial angebrachten Rillen 20 in einem in der Nähe der spiralförmigen Feder 10 auf der Teilungslinie 15 gelegenen Drehpunkt 19 schneiden. Die Rastscheibe 4 ist mittels in z. B. kreisförmige oder rechteckige Schlitze 29 bzw. 31 eingreifende Rastvorrichtungen an einer Seite fest mit der Unterseite einer der beiden Gehäusehälften verbunden (in Fig. 4 und 5 mit der in der Unteransicht rechtsliegenden Gehäusehälfte 16) und kann in eine korrespondierende, im wesentlichen kreissektorenförmige Aussparung 21 an der anderen Gehäusehälfte (in Fig. 5 in die in der Unteransicht linksliegende Gehäusehälfte 17) hineingeschoben werden. Innerhalb der kreissektorenförmigen Aussparung 21 ist ein Haltestift 22 angebracht, der in einen konzentrisch zum Umfang 25 in der Rastscheibe 4 angebrachten Führungsschlitz 23 greift. Werden die beiden Gehäusehälften 16, 17 gegeneinander um den Drehpunkt 19 geschwenkt, so bewegt sich der Haltestift 22 im Führungsschlitz 23. Die Breite des Führungsschlitzes 23 variiert längs der Umfangsrichtung der kreissektorenförmigen Rastscheibe 4, und ist so auf den Haltestift 22 abgestimmt, daß sich breitere Bereiche, in denen der Haltstift 22 leicht durch den Führungsschlitz 23 gleiten kann mit schmaleren Bereichen abwechseln, in denen der Haltestift 22 im Führungsschlitz 23 in Rastpositionen 24 einrastet. Somit kann der Öffnungswinkel α zwischen den beiden keilförmig gegeneinander geschwenkten Gehäusehälften 16, 17 fixiert werden. Die Verwendung der Rastscheibe 4 ermöglicht die Anbringung einer Vielzahl solcher Rastpositionen 24, so daß eine sehr feine Abstufung des Öffnungswinkel α und damit für die einzelnen Benutzer eine individuell sehr genau abstimmbare Schwenkbewegung zwischen den Gehäusehälften 16, 17 möglich ist. Außer durch die aus der Rastscheibe 4 und dem Haltstift 22 bestehenden Gelenkplatte werden die beiden Gehäusehälften 16, 17 auch noch durch die sich der Schwenkbewegung anpassende Zugfeder 10 zusammengehalten. Ergänzend zu dem im Führungsschlitz 23 gleitenden Haltestift 22 können an der im wesentlichen kreissektorenförmigen Aussparung 21 in der Gehäusehälfte 17 Rastzungen 26 angebracht sein, die mit einer Noppe in die Rillen 20 der Rastscheibe greifen, und somit eine zusätzliche Fixierung ermöglichen.

Da für die Rastscheibe 4 ein flexibles Material verwendet wird, und da die Lage des Haltestifts 22 sowie die sich im Führungsschlitz 23 befindlichen Rastpositionen 24 und die radial verlaufenden Rillen 20 so aufeinander abgestimmt sind, daß beim Einrasten des Haltstifts 22 in eine Rastposition 24 stets eine Rille 20 in etwa auf der Teilungslinie 15 zu liegen kommt, ist es zusätzlich zur Schwenkbewegung der beiden Gehäusehälften zueinander möglich, eine Kippbewegung der beiden Gehäusehälften 16, 17 um die Teilungslinie 15 durchzuführen. Die Zugfeder 10 und die flexible Rastscheibe 4 passen sich in jeder Rastposition 24 dieser Kippbewegung an, so daß auch kombinierte Schwenk- und Kippbewegungen durchgeführt werden können.

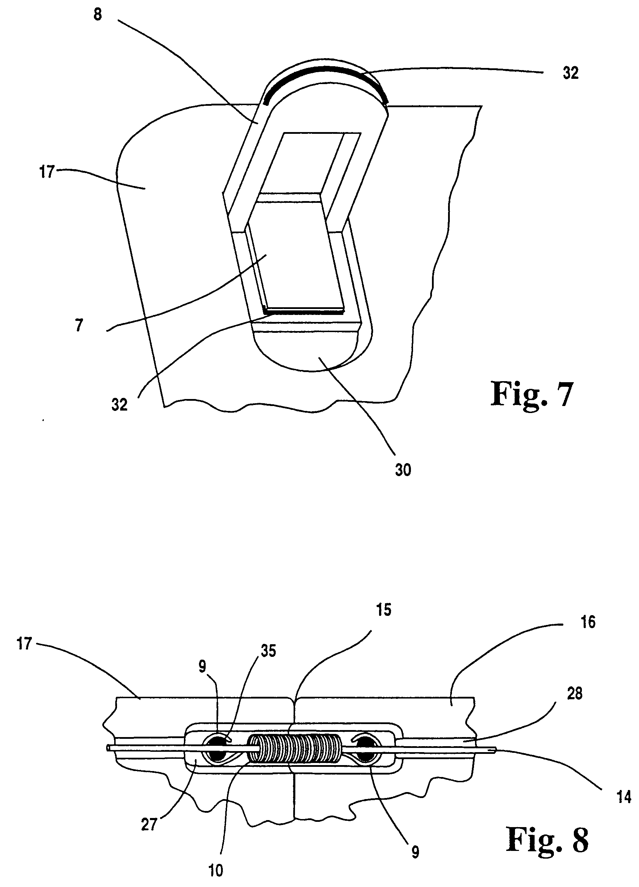

Um die gekippten Gehäusehälften 16, 17 in ihrer Kippbewegung gegeneinander abzustützen, sind an der Unterseite der Gehäusehälften zwei Gruppen unterschiedlich großer, schwenkbarer Gehäusefüße 7, 8 angebracht, die in Fig. 7 gezeigt sind. Eine erste Gruppe kleinerer, schwenkbarer Gehäusefüße 7 mit im wesentlichen quaderförmigen Aufbau ist in in den Gehäusehälften 16, 17 angebrachten Lagern gelagert. Ein Teil oder alle der kleineren, schwenkbaren Gehäusefüße 7 sind jeweils von einem umgreifenden größeren, schwenkbaren Gehäusefuß 8 umgeben, wobei diese größeren, schwenkbaren Gehäusefüße 8 einen im wesentlichen U-förmigen Aufbau zeigen und in denselben Lagern wie die jeweils zugehörigen kleineren, schwenkbaren Gehäusefüße 7 gelagert sind, und dabei um die kleineren, schwenkbaren Gehäusefüße 7 herum bewegbar sind. In Fig. 7 ist ein vollständig eingeklappter kleinerer Gehäusefuß 7 und ein vollständig ausgeklappter größerer Gehäusefuß 8 zu sehen. Beide Gruppen von schwenkbaren Gehäusefüßen sind mit einem an ihrem äußeren Umfang z. B. in einer Nut verlaufenden rutschhemmenden Wulst 32 versehen und können beide vollständig in eine korrespondierende Aussparung 30 an der Unterseite eingeklappt werden, und zwar vorzugsweise so, daß sie im eingeklappten Zustand nicht über den Boden der Tastatur vorstehen. Die Lager der Gehäusefüße sind vorzugsweise so ausgebildet, daß die Gehäusefüße mittels geeigneter Rastvorrichtungen in der vollständig eingeklappten und in der vollständig ausgeklappten Endstellung fixiert werden können.

Aufgrund der Vielzahl der Kombinationsmöglichkeiten von über die Unterseite der Tastatur 1 in Aussparungen 30 angebrachten ein- oder ausgeklappten kleineren, schwenkbaren Gehäusefüßen 7, und aufgrund der zusätzlichen Kombinationsmöglichkeiten in der Höheneinstellung an den Positionen, wo zusätzlich die U-förmigen Bügel der größeren, schwenkbaren Gehäusefüße 8 vorhanden sind, ergeben sich ein Vielzahl von Kippmöglichkeiten der beiden Gehäusehälften zueinander, in denen diese durch die schwenkbaren Gehäusefüße 7, 8 stabil gestützt werden können. Es ist also möglich innerhalb des durch die Rastscheibe 4 und den Haltestift 22 festgelegten Schwenkbereichs (Schwenkwinkel α) die Gehäusehälften 16, 17 in Blickrichtung von vorne nach hinten ansteigend oder umgekehrt von vorne nach hinten abfallend anzuordnen, oder sie so längs der Blickrichtung zu kippen, daß sie in der Mitte erhöht sind und zu den Seiten hinabfallen oder umgekehrt in der Mitte ihren tiefsten Punkt haben und nach außen hin ansteigen. Damit ist gewährleistet, daß jeder Benutzer eine auf seine individuellen Bedürfnisse abgestimmte Konfiguration (Kippwinkel β und Schwenkwinkel α) der einzelnen Gehäusehälften 16, 17 findet, in denen er die Tastatur 1 fixieren kann.

Paßt man die Dicke dieser rutschhemmenden Wülste 32 geeignet an die Größe der schwenkbaren Gehäusefüße 7, 8 und ihre vollständig ausgeklappte Endstellung an, so ist es möglich, daß diese rutschhemmenden Wülste 32 unter jeder aufgrund der kombinierten Kipp- und Schwenkbewegungen der Gehäusehälften 16, 17 sich einstellenden Neigung der vollständig ausgeklappten Gehäusefüße 7, 8 gegen eine ebene Unterlage Kontakt zu dieser halten, und somit für jede mögliche Kipp- und Schwenkkonfiguration (β, α) ein Wegrutschen der schwenkbaren Gehäusefüße 7, 8 auf der Auflagefläche verhindert wird, was zusätzlich die Stabilität der eingestellten Kipp- und Schwenkkonfiguration unterstützt.

Wie in Fig. 8 gezeigt, kann bei der erfindungsgemäßen ergonomischen Tastatur im Inneren der zwei benachbarte Gehäusehälften verbindenden spiralförmigen Zugfeder 10 eine Kabeldurchführung 14 zwischen den beiden benachbarten Gehäusehälften verlaufen, die z. B. elektrische Anschlußkabel enthält, die zwei benachbarte Gehäusehälften 16, 17 miteinander verbindet. Somit ergibt sich im Vergleich zu den beim Stand der Technik verwendeten Kugelgelenkscharnieren eine elegante Möglichkeit, Kabelverbindungen geschützt über die Teilungslinie 15 zwischen zwei benachbarten Gehäusehälften 16, 17 zu führen. Bei der in Fig. 8 gezeigten Darstellung ist die spiralförmige Zugfeder 10 mit je einem abgebogenen Federende 9 an der Unterseite der Gehäusehälften in an der Unterseite verlaufenden Aussparungen 27 in Verankerungselementen 35 befestigt, und die Kabelführung 14 verläuft in an der Unterseite der Tastatur angebrachten Kabelführungsrinne 28. Die Zugfeder 10 kann sich jedoch auch in einer im Inneren der Gehäusehälften verlaufenden Kavität befinden.

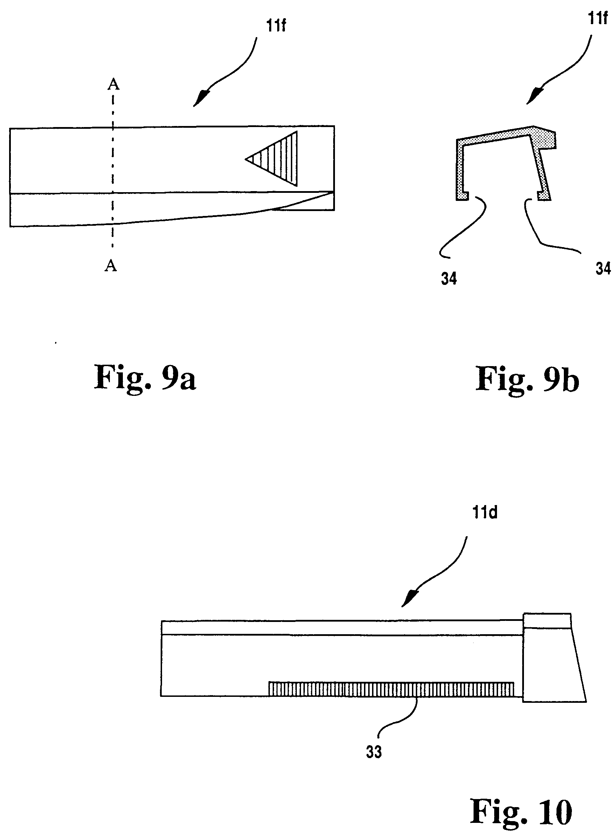

Wie zuvor in Verbindung mit Fig. 2 erwähnt ist bei der erfindungsgemäßen Tastatur 1 die Leertaste die einzige Taste, die gleichzeitig zwei Tastenfeldern 2, 3 zugeordnet ist, und in eine linke und rechte Hälfte 11a, 11b beim Aufklappen der benachbarten Gehäusehälften 16, 17 längs der Teilungslinie 15 getrennt wird. Jede dieser Hälften 11a, 11b ist wiederum in je ein mit der zugehörigen Gehäusehälfte 16 bzw. 17 fest verbundenes Leertasten-Festteil 11c bzw. 11d und ein darauf verschiebbares Leertasten-Gleitteil 11e bzw. 11f unterteilt. Fig. 9a zeigt ein Leertasten-Gleitteil 11f, welches auf dem in Fig. 10 gezeigten Leertasten-Festteil 11d verschoben werden kann. Dabei ist das Leertasten-Festteil 11d mit Rastrillen 33 versehen, in die korrespondierende Raststege 34 (in Fig. 9b im Querschnitt längs der in Fig.9a gezeigten Linie A-A dargestellt) des Leertasten-Gleitteils 11f greifen. Die Leertasten-Gleitteile 11e bzw. 11f können im aufgeklappten Zustand der Gehäusehälften 16 bzw. 17 nach innen in Richtung des zwischen den aufgeklappten Gehäusehälften 16, 17 gebildeten Spalts schrittweise von Rastposition zu Rastposition bewegt werden, um so den für das Anschlagen der Leertaste mit den Daumen störenden Spalt in der Mitte zu überbrücken. Beim Wiederzusammenschieben der Gehäusehälften 16, 17 werden die Leertasten-Gleitteile 11e bzw. 11f automatisch über die zugehörigen Leertasten-Festteile 11c bzw. 11d zurückgeschoben.

Die vorliegende Erfindung ist nicht auf die Verwendung zweier Gehäusehälften beschränkt, sondern man kann weitere, z. B. spezielle Funktionstasten oder numerische Tastenblöcke umfassende Gehäuseteile seitlich anhängen.

## Patentansprüche

1. Ergonomische Tastatur bestehend aus wenigstens zwei in jeweils einer Gehäusehälfte angeordneten und bevorzugterweise jeweils von einer Hand der Benutzerperson betätigbaren Tastaturblöcken, wobei diese Gehäusehälften mittels Gelenken gegeneinander um auf den Teilungslinien zwischen ihnen liegenden Drehpunkten um eine senkrecht zur Blickrichtung stehende Achse schwenkbar und unabhängig von diesem Schwenken gegeneinander um die zwischen ihnen liegenden, im wesentlichen in Blickrichtung verlaufenden Teilungslinien kippbar sind,
**dadurch gekennzeichnet**,
daß in der Nähe des auf der Teilungslinie (15) zwischen zwei nebeneinanderliegenden Gehäusehälften (16, 17) liegenden Drehpunkts (19) der Schwenkbewegung ein jeweils quer zur Teilungslinie (15) laufendes und in beide Gehäusehälften (16, 17) greifendes erstes Gelenk in Form einer spiralfömig aufgewickelten Zugfeder (10) angebracht ist, und
daß diese nebeneinanderliegenden, voneinander getrennten Gehäusehälften (16, 17) zusätzlich zu diesem ersten Gelenk (4) jeweils mit einer Gelenkplatte verbunden sind, welche aus einer im wesentlichen kreissektorenförmigen flexiblen Rastscheibe (4) besteht, die mit einer dieser beiden nebeneinanderliegenden, voneinander getrennten Gehäusehälften (16) fest verbunden ist, und von dieser aus sich über die Teilungslinie (15) zwischen den beiden nebeneinanderliegenden Gehäusehälften in den Bereich der anderen Gehäusehälfte (17) erstreckt sowie einem an der anderen Gehäusehälfte (17) angebrachten Haltestift (22), welcher in einen in der Rastscheibe (4) laufenden und zu dem äußeren Umfang (25) deren Kreissektorfläche im wesentlichen konzentrisch verlaufenden Führungsschlitz (23) so greift, daß ein Auseinanderschwenken der beiden Gehäusehälften (16, 17) um den auf der Teilungslinie (15) zwischen den Gehäusehälften (16, 17) liegenden und sich als Schnittpunkt von Radien der kreissektorenförmigen Rastscheibe (4) ergebenden Drehpunkt (19) möglich ist.

2. Ergonomische Tastatur nach Anspruch 1,
**gekennzeichnet durch**
zwei Gruppen individuell verstellbarer, bevorzugterweise in der Grundfläche der Gehäusehälften (16, 17) versenkbarer, schwenkbarer Gehäusefüße (7, 8), wobei
eine erste Gruppe kleinerer, schwenkbarer Gehäusefüße (7) um in den Gehäusehälften angebrachte Lager schwenkbar angebracht ist, und
ein Teil der ersten Gruppe kleinerer, schwenkbarer Gehäusefüße jeweils von einem größeren, schwenkbaren Gehäusefuß (8) einer zweiten Gruppe größerer, schwenkbarer Gehäusefüße umgeben ist, wobei diese größeren, schwenkbaren Gehäusefüße (8) einen im wesentlichen U-förmigen Aufbau zeigen und in den selben Lagern wie die jeweils zugehörigen kleineren, schwenkbaren Gehäusefüße (7) schwenkbar gelagert sind,
wobei sowohl die kleineren als auch die größeren, schwenkbaren Gehäusefüße (7, 8) zwischen einer vollständig eingeklappten Endstellung und einer vollständig ausgeklappten Endstellung schwenkbar sind.

3. Ergonomische Tastatur nach Anspruch 2,
**dadurch gekennzeichnet,**
daß sowohl die kleineren als auch die größeren, schwenkbaren Gehäusefüße (7, 8) in ihren Lagern mittels Rastvorrichtungen in ihrer jeweils vollständig eingeklappten bzw. vollständig ausgeklappten Endstellung fixierbar sind.

4. Ergonomische Tastatur nach einem der Ansprüche 1 bis 3,
**dadurch gekennzeichnet,**
daß im Inneren der zwei benachbarte Gehäusehälften (16, 17) verbindenden spiralfömig aufgewickelten Zugfeder (10) ein die beiden benachbarten Gehäusehälften (16, 17) verbindendes Kabel (14) geführt ist.

5. Ergonomische Tastatur nach einem oder mehreren der Ansprüche 1 bis 4,
**dadurch gekennzeichnet**,
daß an der dem Benutzer zugewandten Seite einer jeden Gehäusehälfte (16, 17) eine von der jeweils zugehörigen Gehäusehälfte lösbare Handballenauflage (12, 13) anbringbar ist.

6. Ergonomische Tastatur nach Anspruch 5,
**dadurch gekennzeichnet**,
daß die Handballenauflagen (12, 13) mit schwenkbaren Gehäusefüßen (7, 8) versehen sind.

7. Ergonomische Tastatur nach einem oder mehreren der Ansprüche 1 bis 6,
**dadurch gekennzeichnet**,
daß die schwenkbaren Gehäusefüße (7, 8) mit teilweise umlaufenden, rutschhemmenden Wülsten versehen sind, die so von den zugehörigen schwenkbaren Gehäusefüßen (7, 8) überstehen, daß es für alle möglichen Kipp- und Schwenkkonfigurationen (β, α) der einzelnen Gehäusehälften (16, 17) stets zu einem Aufliegen der rutschhemmenden Wülste (32) auf einer sich unter den Gehäusehälften (16, 17) befindlichen ebenen Unterlage kommt.

8. Ergonomische Tastatur nach einem oder mehreren der Ansprüche 1 bis 7,
**dadurch gekennzeichnet**,
daß die Leertaste (11) gleichzeitig zwei benachbarten, von einander getrennten Gehäusehälften (16, 17) zugeordnet und längs der zwischen diesen verlaufenden Teilungslinie (15) in zwei Hälften (11a, 11b) geteilt ist, wobei jede dieser Hälften (11a, 11b) wiederum in je ein mit der zugehörigen Gehäusehälfte (16 bzw. 17) fest verbundenes Leertasten-Festteil (11c bzw. 11d) und ein darauf verschiebbares Leertasten-Gleitteil (11e bzw. 11f) unterteilt ist, wobei die Leertasten-Festteile (11c, 11d) mit Rastrillen (33) versehen sind, in die korrespondierende Raststege (34) der Leertasten-Gleitteile (11e bzw. 11f) so greifen, daß die Leertasten-Gleitteile (11e bzw. 11f) im aufgeklappten Zustand der Gehäusehälften (16 bzw. 17) in Richtung des zwischen ihnen gebildeten Spalts verschiebbar sind.

9. Ergonomische Tastatur nach einem oder mehreren der Ansprüche 1 bis 8,
**dadurch gekennzeichnet,**
daß am Boden einer Gehäusehälfte (17) eine Rastzunge (26) angebracht ist, die mit einer Rastnoppe in die Rillen (20) der Rastscheibe (4) eingreift.
